## Europäisches Patentamt
## European Patent Office
## Office européen des brevets

(11) Veröffentlichungsnummer: **0 107 616**
**B1**

(12) **EUROPÄISCHE PATENTSCHRIFT**

(45) Veröffentlichungstag der Patentschrift:
23.04.86

(21) Anmeldenummer: 83810432.1

(22) Anmeldetag: 26.09.83

(51) Int. Cl.⁴: **C 08 K 5/13, C 08 K 5/37,**
**C 08 L 25/06**

(54) **Schlagzähes Polystyrol.**

(30) Priorität: **30.09.82 US 430646**

(43) Veröffentlichungstag der Anmeldung:
**02.05.84 Patentblatt 84/18**

(45) Bekanntmachung des Hinweises auf die Patenterteilung:
**23.04.86 Patentblatt 86/17**

(84) Benannte Vertragsstaaten:
**DE FR GB IT**

(56) Entgegenhaltungen:
**US - A - 3 285 855**
**US - A - 3 334 046**

(73) Patentinhaber: **CIBA-GEIGY AG, Klybeckstrasse 141,**
**CH-4002 Basel (CH)**

(72) Erfinder: **Tobin, William W., 66 Valley View Court,**
**Norwalk Connecticut 06851 (US)**
Erfinder: **Geib, Jay R., 6 Ledge Lane, Stamford**
**Connecticut 06905 (US)**

ACTORUM AG

## Beschreibung

Verschiedenartige schlagfeste Polystyrol-Typen sind dem Fachmann bekannt. Zur Verbesserung der Schlagfestigkeit, Zähigkeit und Versprödungstendenz wird Polystyrol häufig mit Kautschuk, insbesondere mit Polybutadien kombiniert. Der Kautschuk wird zu diesem Zweck in Form einzelner Teilchen in die Polystyrol-Matrix eindispergiert. Die meisten schlagfesten Polystyroltypen sind daher Pfropf-Copolymere oder physikalische Mischungen der Komponenten (polyblends). Die Herstellung solcher modifizierten Polystyrole ist bekannt. Schlagzähes Polystyrol hat die meisten für Polystyrol bekannten Vorzüge, wie Härte, einfache Herstellbarkeit, gewisse Resistenz gegen Chemikalien, sowie die Zugänglichkeit verschiedener Schattierungen und Farben. Schlagzähes Polystyrol wird daher für verschiedene Zwecke benutzt, z.B. im Apparatebau, Gehäuse, Verpackungsmaterial, Spielzeuge, Haushaltungsgeräte, Industrieteile, dekorative Wandbekleidungen u.a. Verschiedene Publikationen über schlagfestes Polystyrol sind bekannt, so z.B. in Boundy & Boyer «Styrene — Its Polymers, Copolymers and Derivatives», Reichold Publishing Co., New York.

Da schlagfestes Polystyrol zum oxidativen und thermischen Zerfall und zu Verfärbung neigt, wurden eine Vielzahl von Antioxidantien und Lichtschutzmittel zur Stabilisierung empfohlen.

Bekannte Verbindungen, wie Thiazine oder Propionsäurederivate eignen sich an sich gut zur Stabilisierung von schlagfestem Polystyrol.

Bezüglich der Verhinderung des thermisch induzierten Abbaus konnten allerdings keine ganz befriedigenden Ergebnisse gefunden werden, was sich vor allem bei der Hitzeverformung nachteilig auswirkt.

Aufgabe der vorliegenden Erfindung war es daher, ein Stabilisatorsystem für schlagfestes Polystyrol zu finden.

Es wurde gefunden, dass das Stabilisatorsystem enthaltend 2,4-Bis-(n-octylthio)-6-(4'-hydroxy--3',5'-di-tert.butylanilino)-1,3,5-triazin und β-(4--Hydroxy-3,5-di-tert.butylphenyl)-propionsäureoctadecylester sich ausgezeichnet für schlagzähes Polystyrol eignet.

Überraschenderweise gibt dieses System dem zu schützenden Substrat hohe Resistanz gegen oxidativen oder thermisch induzierten Abbau, wobei die Komponenten allein insbesondere gegen durch Hitze verursachten Abbau nicht befriedigen. Nebst dem erfindungsgemäss zu erzielenden Synergismus, zeichnet sich dieses Stabilisatorsystem durch eine hohe Farbqualität aus, was vor allem für die Verarbeitung von schlagfestem Polystyrol von entscheidender Bedeutung ist.

2,4-Bis-(n-octylthio)-6-(4'-hydroxy-3',5'-di-tert.-butylanilino)-1,3,5-triazin ist eine bekannte Verbindung und z.B. in US-PS 3 255 191 und 3 334 046 beschrieben.

β-(4-Hydroxy-3,5-di-tert.butylphenyl)-propionsäureoctadecylester ist ebenfalls bekannt und beispielsweise in den US-PS 3 285 855 und 3 330 859 offenbart.

Um hervorragende Eigenschaften zu erreichen, wird das Triazin vorzugsweise in Konzentrationen von 0,01 bis 0,04 Gew.-%, und das Propionat in Konzentrationen von 0,02 bis 0,08 Gew.-% eingesetzt. Besonders bevorzugte Bereiche sind 0,0125 bis 0,0375 für das Triazin und 0,0375 bis 0,075 für das Propionat.

Das erfindungsgemässe System eignet sich für alle Arten von schlagfestem Polystyrol, also auch für modifizierte Polystyrole, z.B. solche welche als SBR bekannt sind.

Das Stabilisatorsystem kann dem schlagfesten Polystyrol auf bekannte Weise zugegeben werden. Es kann aber auch vor der Polymerisation beigemischt werden. Wird es erst nach der Polymerisation zugegeben, kann es in an sich bekannter Weise in einem Lösungsmittel, wie Methylenchlorid, Hexan, Cyclohexan u.a. beigemischt werden, wobei anschliessend das Lösungsmittel abgedampft wird.

Es können auch weitere Co-Additive zugegeben werden. Als Beispiele sind zu nennen:

### 1. Antioxidantien

#### 1.1. Alkylierte Monophenole

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

#### 1.2. Alkylierte Hydrochinone

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

#### 1.3. Hydroxylierte Thiodiphenylether

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

#### 1.4. Alkyliden-Bisphenole

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methylen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)--butan

2,6-Di-(3-tert.butyl-5-methyl-2-hydroxybenzyl)-4-
-methylphenol
1,1,3-Tris-(5-tert.butyl-4-hydroxy-2-methyl-
phenyl)-butan
1,1-Bis-(5-tert.butyl-4-hydroxy-2-methylphenyl)-3-
-n-dodecylmercapto-butan
Ethylenglykol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-
-6-tert.butyl-4-methyl-phenyl]-terephthalat

*1.5. Benzylverbindungen*
1,3,5-Tri-(3,5-di-tert.butyl-4-hydroxybenzyl)-
-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)di-
thiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-
-dioctadecylester
3,5-Di-tert.butyl-4-hydroxybenzyl-phosphonsäure-
-monoethylester, Calcium-salz.

*1.6. Acylaminophenole*
4-Hydroxy-laurinsäureanilid
4-Hydroxy-stearinsäureanilid
2,4-Bis-octylmercapto-6-(3,5-di-tert.butyl-4-hydr-
oxyanilino)-s-triazin
N-(3,5-di-tert.butyl-4-hydroxyphenyl)-carbamin-
säureoctylester.

*1.7. Ester der β-(3,5-Di-tert.butyl-4-hydroxy-phenyl)-propionsäure mit ein- oder mehrwertigen
Alkoholen, wie z.B. mit*

| | |
|---|---|
| Methanol | Diethylenglykol |
| Octadecanol | Triethylenglykol |
| 1,6-Hexandiol | Pentaerythrit |
| Neopentylglykol | Tris-hydroxyethyl-iso-cyanurat |
| Thiodiethylenglykol | Di-hydroxyethyl-oxal-säure diamid |

*1.8. Ester der β-(5-tert.butyl-4-hydroxy-3-methyl-
phenyl)-propionsäure mit ein- oder mehrwertigen Alkoholen, wie z.B. mit*

| | |
|---|---|
| Methanol | Diethylenglykol |
| Octadecanol | Triethylenglykol |
| 1,6-Hexandiol | Pentaerythrit |
| Neopentylglykol | Tris-hydroxyethyl-iso-cyanurat |
| Thiodiethylenglykol | Di-hydroxyethyl-oxal-säurediamid |

*1.9. Amide der β-(3,5-Di-tert.butyl-4-hydroxyphenyl)-propionsäure wie z.B.*
N,N'-Di-(3,5-di-tert.butyl-4-hydroxyphenylpropio-
nyl)-hexamethylen-diamin

N,N'-Di-(3,5-di-tert.butyl-4-hydroxyphenylpropio-
nyl)-trimethylen-diamin
N,N'-Di-(3,5-di-tert.butyl-4-hydroxyphenylpropio-
nyl)-hydrazin

*2. UV-Absorber und Lichtschutzmittel*

*2.1. 2-(2'-Hydroxyphenyl)-benztriazole,* wie z.B.
das 5'-Methyl-, 3',5'-Di-tert.butyl-, 5'-Tert.butyl-,
5'-(1,1,3,3-Tetramethyl-butyl)-, 5-Chlor-3',5'-di-
-tert.butyl-, 5-Chlor-3'-tert.butyl-5'-methyl-, 3'-
-sec.Butyl-5'-tert.butyl-, 4'-Octoxy-, 3',5'-Di-tert.-
amyl-, 3',5'-Bis-(α,α-dimethylbenzyl)-Derivat.

*2.2. 2-Hydroxybenzophenone,* wie z.B. das 4-
-Hydroxy-, 4-Methoxy-, 4-Octoxy-, 4-Decyloxy-, 4-
-Dodecyloxy-, 4-Benzyloxy-, 4,2',4'-Trihydroxy-,
2'-Hydroxy-4,4'-dimethoxy-Derivat.

*2.3. Ester von gegebenenfalls substituierten Benzoesäuren,* wie z.B. 4-Tert.butyl-phenylsalicylat,
Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-
-2,4-di-tert.butylphenylester, 3,5-Di-tert.butyl-4-
-hydroxybenzoesäurehexadecylester.

*2.4. Acrylate,* wie z.B. α-Cyan-β,β-diphenylacryl-
säure-ethylester bzw. -isooctylester, α-Carbometh-
oxy-zimtsäuremethylester, α-Cyano-β-methyl-p-
-methoxy-zimtsäuremethylester bzw. -butylester,
α-Carbomethoxy-p-methoxy-zimtsäure-methyl-
ester, N-(β-Carbomethoxy-β-cyanovinyl)-2-methyl-
-indolin.

*2.5. Nickelverbindungen,* wie z.B. Nickelkomplexe
des 2,2'-Thio-bis-[4-(1,1,3,3-tetramethylbutyl)-
-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyl-dithiocarbamat, Nickelsalze von
4-Hydroxy-3,5-di-tert.butylbenzyl-phosphonsäure-
-monoalkylestern wie vom Methyl- oder Ethylester,
Nickelkomplexe von Ketoximen wie von 2-Hydroxy-
-4-methyl-phenyl-undecylketonoxim, Nickelkomplexe des 1-Phenyl-4-lauroyl-5-hydroxy-pyrazols,
gegebenenfalls mit zusätzlichen Liganden.

*2.6. Sterisch gehinderte Amine,* wie z.B. Bis-
-(2,2,6,6-tetramethylpiperidyl)sebacat
Bis-(1,2,2,6,6-pentamethylpiperidyl)-sebacat
n-Butyl-3,5-di-tert.butyl-4-hydroxybenzyl-malonsäure-bis(1,2,2,6,6-pentamethylpiperidyl)-ester,
Kondensationsprodukt aus 1-Hydroxy-ethyl-
-2,2,6,6-Tetramethyl-4-hydroxypiperidin und Bernsteinsäure, Kondensationsprodukt aus N,N'-
-(2,2,6,6-Tetramethylpiperidyl)-hexamethylendiamin und 4-tert.octylamino-2,6-dichlor-1,3,5-s-triazin,
Tris-(2,2,6,6-tetramethylpiperidyl)-nitrilotriacetat,
Tetrakis-(2,2,6,6-tetramethyl-4-piperidyl)-1-2-3-4-
-butantetracarbonsäure,
1,1'-(1,2-Ethandiyl)-bis-(3,3,5,5-tetramethyl-pipe-
razinon).

2.7. *Oxalsäurediamide,* wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von ortho- und para-Methoxy- sowie von o- und p-Ethoxy-di-substituierte Oxaniliden.

3. *Metalldesaktivatoren,* wie z.B. N,N'-Diphenyloxalsäurediamid, N-Salicylal-N'-salicyloylhydrazin, N,N'-Bis-salicyloylhydrazin, N,N'-Bis-(3,5-di-tert.-butyl-4-hydroxyphenylpropionyl)-hydrazin, 3-Salicyloylamino-1,2,4-triazol, Bis-benzyliden-oxalsäuredihydrazid.

4. *Phosphite und Phosphonite,* wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.-butylphenyl)-4,4'-biphenylen-diphosphonit.

5. *Peroxidzerstörende Verbindungen,* wie z.B. Ester der β-Thio-diproprionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. *Polyamidstabilisatoren,* wie z.B. Kupfersalze in Kombination mit Jodiden und/oder Phosphorverbindungen und Salze des zweiwertigen Mangans.

7. *Basische Co-Stabilisatoren,* wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. *Nukleierungsmittel,* wie z.B. 4-tert.Butylbenzoesäure, Adipinsäure, Diphenylessigsäure.

9. *Füllstoffe und Verstärkungsmittel,* wie z.B. Calciumcarbonat, Silikate, Glasfasern, Asbest, Talk, Kaolin, Glimmer, Bariumsulfat, Metalloxide und -hydroxide, Russ, Graphit.

10. *Sonstige Zusätze,* wie z.B. Weichmacher, Gleitmittel, Emulgatoren, Pigmente, Optische Aufheller, Flammschutzmittel, Antistatika, Treibmittel.

Die folgenden Beispiele erläutern die vorliegende Erfindung.

### Beispiel 1

Eine 8 Gew.-%ige Lösung eines Polybutadiens (Firestone DIENE® 55) in monomerem Styrol wird in einer Rollmühle hergestellt. Die in den untenstehenden Beispielen angegebenen Stabilisatoren werden gleichzeitig zugegeben. Nach der Polymerisation werden ausserdem 500 ppm Zinkstearat hinzugefügt. Das Reaktionsgefäss wird während einer halben Stunde auf 121°C erwärmt und unter Rühren weiter bei dieser Temperatur gehalten, bis etwa 30-35% des Monomeren umgesetzt sind (~ 2 1/2 h). Dabei wird die Rührgeschwindigkeit so eingestellt, dass eine Teilchengrösse von 2-4 µm erreicht wird. Die Polymerisation wird alsdann bei einer Temperatur von 100°C in einem Sandbad vervollständigt. Nach etwa einer Stunde wird die Temperatur innerhalb einer Stunde auf 140°C erhöht und nachher während 8 Stunden auf 220°C erhöht. Der so erhaltene Polymerblock wird auf bekannte Art von allen flüchtigen Bestandteilen befreit und zerkleinert, granuliert, extrudiert (bei 205°C) und dann bei 205°C zu Platten verpresst. In einem Umluftofen werden die Proben bei 150°C gealtert. Andere Proben werden bei 80°C gealtert. Danach wird als Mass für die Polyschädigung der Yellowness Index gemäss ASTM D 1925-63 T gemessen. Ausserdem wird die Dehnung bei einer Zugkraft von 5 mm/min gemäss ASTM D 638 gemessen. Die Resultate sind in den Tabellen I-IV aufgeführt; wobei die Stabilisatoren wie folgt definiert sind:

*Stabilisator A:* β-(4-Hydroxy-3,5-di-tert.butylphenyl)-propionsäure-octadecylester.

*Stabilisator B:* 2,6-Bis-(octylthio)-6-(4'-hydroxy-3',5'-di-tert.butylanilino)-1,3,5-triazin.

### Tabelle I

| Stabilisator | Konz. | Prozent Dehnung nach Alterung bei 150°C (Stunden) | | | |
|---|---|---|---|---|---|
| | | 0 | 1/2 | 1 | 1 1/2 |
| A | 0,1 | 56 | 38 | 10 | 7 |
| B | 0,05 | 66 | 45 | 22 | 7 |
| A + B | 0,05 0,025 | 53 | 36 | 22 | 8 |
| A + B | 0,075 0,0125 | 57 | 53 | 13 | 7 |
| A + B | 0,025 0,0375 | 59 | 45 | 22 | 11 |

*Tabelle II*

| Stabilisator | Konz. | Yellowness Index Stunden bei 150°C | | | |
|---|---|---|---|---|---|
| | | 0 | 1/2 | 1 | 1 1/2 |
| A | 0,1 | —6 | —1 | 7 | 13 |
| B | 0,05 | —3 | 4 | 5 | 8 |
| A + B | 0,05 0,025 | —7 | —1 | 1 | 3 |
| A + B | 0,075 0,0125 | —6 | —2 | 1 | 3 |
| A + B | 0,025 0,0375 | —6 | —2 | 3 | 5 |

*Tabelle III*

| Stabilisator | Konz. | Prozent Dehnung Stunden bei 80°C | | | | |
|---|---|---|---|---|---|---|
| | | 0 | 300 | 600 | 900 | 1200 |
| A | 0,1 | 56 | 36 | 17 | 3 | 3 |
| B | 0,05 | 66 | 23 | 14 | 7 | 3 |
| A + B | 0,05 0,025 | 53 | 33 | 32 | 15 | 8 |
| A + B | 0,075 0,0125 | 57 | 36 | 36 | 14 | 13 |
| A + B | 0,025 0,0375 | 59 | 32 | 27 | 22 | 19 |

*Tabelle IV*

| Stabilisator | Konz. | Yellowness Index Stunden bei 80°C | | | | |
|---|---|---|---|---|---|---|
| | | 0 | 300 | 600 | 900 | 1200 |
| A | 0,1 | —6 | 1 | 5 | 40 | 44 |
| B | 0,05 | —3 | 9 | 17 | 24 | 36 |
| A + B | 0,05 0,025 | —7 | 5 | 10 | 16 | 19 |
| A + B | 0,075 0,0125 | —6 | 5 | 7 | 9 | 16 |
| A + B | 0,025 0,0375 | —6 | 4 | 11 | 14 | 16 |

Aus diesen Werten geht deutlich hervor, dass die erfindungsgemäss einzusetzende Antioxidantienmischung eine signifikant erhöhte Wirkung in schlagzähem Polystyrol entfaltet.

**Patentansprüche**

1. Schlagfestes Polystyrol enthaltend ein Stabilisatorsystem enthaltend 2,4-Bis-(n-octylthio)-6-(4'-

-hydroxy-3',5'-di-tert.butyl-anilino)-1,3,5-triazin und β-(4-Hydroxy-3,5-di-tert.butylphenyl)-propion-säureoctadecylester.

2. Verwendung eines Stabilisatorsystems gemäss Anspruch 1 zum Stabilisieren von schlagfestem Polystyrol.

**Claims**

1. Impact polystyrene comprising a stabiliser system containing 2,4-bis-(n-octylthio)-6-(4'-hydroxy-3',5'-di-tert-butylanilino)-1,3,5-triazine and octadecyl β-(4-hydroxy-3,5-di-tert-butylphenyl)-propionate.

2. Use of a stabiliser system according to claim 1 for stabilising impact polystyrene.

**Revendications**

1. Polystyrène résistant aux chocs qui contient comme stabilisant une association de 2,4-bis-(n--octylthio)-6-(4'-hydroxy-3',5'-di-tert-butylanilino)--1,3,5-triazine et de β-(4-hydroxy-3,5-di-tert-butyl-phényl)-propionate d'octadécyle.

2. Utilisation d'une association de stabilisants selon la revendication 1 pour stabiliser du polystyrène résistant aux chocs.